# EUROPEAN PATENT SPECIFICATION

(11) **EP 2 070 986 B1**
(45) Date of publication and mention of the grant of the patent: **19.10.2011**
(21) Application number: 07790355.7
(22) Date of filing: 10.08.2007
(51) Int. Cl.: C08L 67/02, B29C 55/02, C08J 5/18, B29K 67/00

(54) **POLYESTER FILM FOR RELEASE FILM**
POLYESTERFOLIE FÜR TRENNFOLIE
FILM DE POLYESTER POUR PELLICULE ANTI-ADHÉSIVE

(30) Priority: 11.09.2006 JP 2006246023; 22.09.2006 JP 2006256692
(43) Date of publication of application: 17.06.2009
(73) Proprietor: Mitsubishi Plastics, Inc., Chuo-ku, Tokyo (JP)
(72) Inventor: SUZUKI, Kanae, Maibara-shi Shiga-ken (JP)
(74) Representative: Merkle, Gebhard
(86) International application number: PCT/JP2007/000868
(87) International publication number: WO 2008/032428

(56) References cited:
- WO-A1-2005/056291
- JP-A- 2000 150 298
- JP-A- 2002 207 119
- JP-A- 2004 237 451
- JP-A- 2004 323 766
- JP-A- 2005 307 038
- JP-A- 2006 175 632

## Description

### TECHNICAL FIELD

The present invention relates to a polyester film useful for making a release film. More particularly, it relates to a polyester film which has excellent optical properties, which are the important characteristics for the films to be applied to specific optical uses such as liquid crystal displays, and is capable of providing high-degree precision in detection of faults in film inspections. This polyester film finds particularly useful application to the release film for the polarizing plates.

### BACKGROUND ART

The polyester films represented by polyethylene terephthalate film and polyethylene naphthalate film are applied to a wide variety of uses by ionizing their excellent characteristics such as high mechanical strength, dimensional stability, flatness, heat resistance, chemical resistance and optical properties, in addition to their high cost performance. An example for such a film is disclosed in JP 2005-307038 A. However, with diversification of their uses, the film working and use conditions become diverse, and in use of these films as a release film for the polarizing plates, there has been the problem that in the inspection of the polarizing plate for contaminants, the particles in the release film could become bright points to lower precision of the inspection.

Recently, with rapid spread of cellphones and personal computers, there has been a remarkable rise of demand for liquid crystal displays (LCD) which are capable of size and weight reduction, low power consumption and high quality imaging as compared with the conventional CRT displays. Growth of techniques relating to enlargement of LCD screens is also remarkable. As an attempt for enlargement of display screen, LCD is used lately for the large-screen (such as 30-inch or larger) TV's. In the large-screen LCD, it is attempted to provide a bright screen by increasing the brightness of backlight or by incorporating a brightness-increasing film in the liquid crystal units.

Recently, there has been a trend toward higher brightness of the display screen for the improvement of visibility of LCD, and in such high-brightness type LCD, existence of the small bright points in the display often presents a problem. Thus, in the structural components such as polarizing plate, phase-difference plate and phase-difference polarizing plate built in the display, a contaminant of a small size which could be ignored in the conventional low-brightness type LCD has become a matter that calls for attention. Therefore, it is required to make measures for preventing any contaminant from entering the production line, and it is also of paramount importance to enhance inspection precision to allow infallible recognition of the presence of contaminant should it enter the production system.

Visual inspection based on the Cross Nicol method is usually used for fault inspection of the polarizing plates. Also, an automatic contaminant inspection unit utilizing the Cross Nicol arrangement came to be used for detection of faults in the polarizing plates used for large-screen (such as 40-inch or larger screen) TV's. According to the Cross Nicol method, a pair of polarizing plates are brought into an extinct state with their main axes of orientation being crossed at right angles, and if there is any contaminant or fault, it emerges as a bright point, thus allowing visual inspection of faults.

The particles in the polyester films have conventionally been used for providing the films with the desired slip and winding characteristics, and if the particle size and content in the films are outside the appropriate ranges, the desired slip and/or winding characteristics are not provided, resulting in a reduced productivity. However, in case where the particle size and content are within the usually adopted ranges, when such a polyester film is used for a release film for the polarizing plates, the added particles present the bright points in the process of contaminant inspection as mentioned above to invite impediment to the inspection.

Usually an adhesive layer is provided on the polarizing plates and a polyester film having a release layer formed thereon is used as a release film. For the inspection of the products of such a structure, Cross Nicol inspection is carried out in a state where the release polyester film is sandwiched between a pair of polarizing plates. Generally, when a release polyester film is used for this purpose, there may arise the problem that the contaminant or fault becomes hard to recognize and tends to be overlooked in the Cross Nicol inspection.

In connection with these matters, it has been disclosed that inspection precision is enhanced if the retardation value remains within a certain range when a polyester film is held between a pair of polarizing plates (see Japanese Patent Laid-Open (ROKAI) No. 2000-338327). However, even if these techniques are employed for the inspection of the display systems for which high-degree quality is required, they may still prove unsatisfactory for carrying out the inspection for infallibly detecting any fault.

In the case of a polyester-based release film designed to be used as a release film for the polarizing plates, its production process includes a step in which a release film and a polarizer base are bonded to each other with an adhesive layer interposed between them, and then rolled up. In this process, however, in the drying step after application of an adhesive, there may take place precipitation of the oligomer. The oligomer precipitated on the release layer surface transfers to the adhesive layer on the base, so that when the polarizer base having an oligomer-deposited adhesive layer is bonded to a glass substrate to make LCD, there may result troubles such as reduction of brightness of the produced LCD. With the recent trend toward higher brightness of the display screen for the improvement of visibility of LCD, the above-mentioned troubles are posing a serious problem.

In such a contaminant inspection system, the oligomer precipitated on the film surface on the opposite side of the release layer is detected as a contaminant in the polarizing plate, which worsens the yield of production of the polarizing plates. This is yet another problem on the agenda.

### DISCLOSURE OF THE INVENTION

### PROBLEM TO BE SOLVED BY THE INVENTION

The present invention is intended to solve these prior art problems, and its subject matter is to provide a polyester film useful as a base for a release film, which is capable of realizing high-degree precision in the inspection of polarizing plates by the Cross Nicol method.

### MEANS FOR SOLVING THE PROBLEM

As a result of the present inventors' earnest studies to solve the above problems, it has been found that a polyester film having a specific structure can provide a film useful particularly as a base for a release film without impairing the excellent properties inherent to the film.

Thus, in an aspect of the present invention, there is provided a polyester film applicable to the release films, the said polyester film containing the particles having an average size in the range of 0.2 to 1.5 µm and a particle size distribution factor (d25/d75) in the range of 1.0 to 2.0, wherein in the in-plane direction of the film, its refractive index (nβ) in the direction normal to the main axis of orientation is 1.6400 or less.

In another aspect of the present invention, there is provided a polyester film applicable to the release films according to claim 1, wherein the amount of oligomer on the film surface after coating with methyl ethyl ketone, drying and 10-minute heat treatment at 180°C is 5.0 mg/m² or less.

### EFFECT OF THE INVENTION

According to the present invention, it is possible to provide a polyester film applicable to the release films for the polarizing plates, phase-difference plates and the like, and capable of minimizing emergence of bright points to enhance precision of film inspection for contaminants. Also, the film of the present invention can be utilized advantageously as a polyester film for the release films which is capable of realizing high-degree precision in, for instance, inspection of the polarizing plates by the Cross Nicol method. Thus the present invention is of high industrial value.

### BEST MODE FOR CARRYING OUT THE INVENTION

In the following, the present invention is described in detail.

The "polyester film" referred to in the present invention is a film obtained by melt extruding a polyester from an extruder head, cooling the extruded molten polyester sheet, and subjecting it to stretching and heat treatment as required.

The polyester comprising the film of the present invention is one obtained by polycondensing an aromatic dicarboxylic acid and an aliphatic glycol. Examples of the aromatic dicarboxylic acids usable here include terephthalic acid and 2,6-naphthalenedicarboxylic acid, and examples of the aliphatic glycols include ethylene glycol, diethylene glycol and 1,4-cyclohexanedimethanol. Typical examples of the polyesters usable in the present invention are polyethylene terephthalate (PET) and polyethylene-2,6-naphthalene dicarboxylate (PEN). The polyester used in the present invention may be either a homopolyester or a copolymer polyester. In the case of a copolymer polyester, it is required not to contain more than 30 mol% of a third component.

The dicarboxylic acid moiety of these copolymer polyesters comprises one or more of the carboxylic acid substances selected from isophthalic acid, phthalic acid, terephthalic acid, 2,6-naphthalenedicarboxylic acid, adipic acid, sebacic acid and oxycarboxylic acids (such as p-oxybenzoic acid). The glycol moiety comprises one or more of the glycolic substances selected from ethylene glycol, diethylene glycol, propylene glycol, butanediol, 1,4-cyclohexanedimethanol and neopentyl glycol.

The polyester may be formed into chips after melt polymerization and then further subjected where necessary to solid-phase polymerization by heating under reduced pressure or in a stream of an inert gas such as nitrogen. The polyester used in the present invention may be one obtained directly from a melt polymerization reaction, but it is preferable to use a material obtained by solid-phase polymerizing a chipped polyester after melt polymerization because it is possible with such a material to reduce the amount of oligomer contained therein. Intrinsic viscosity of the thus obtained polyester is preferably not less than 0.40 dl/g, more preferably 0.40 to 0.90 dl/g.

The oligomer content in the polyester material is preferably not more than 0.7% by weight, more preferably not more than 0.5% by weight, even more preferably not more than 0.3% by weight. When the oligomer content in the polyester material is low, the effect of reducing the oligomer content in the produced polyester film or preventing precipitation of the oligomer on the film surface is particularly notable.

In the present invention, the used film may have a structure in which a polyester with such a low content of oligomer is laminated by co-extrusion on the surface on at least one side of the layer comprising a polyester of an ordinary oligomer content. In case where the film has such a structure, there can be obtained an effect of deterring precipitation of oligomer as well as an effect of preventing emergence of bright points due to oligomer precipitation.

In the polyester obtained in the present invention, various additives such as weather resistance agent, light resistance agent, antistatic agent, lubricant, light shielding agent, antioxidant, fluorescent brightener, matting agent, heat stabilizer, and colorants such as pigment and dye may be contained within limits not impairing the spirit of the present invention.

As the particles contained in the film, those of silicon oxide, alumina, calcium carbonate, kaolin, titanium oxide and fine powder of the crosslinked polymers such as shown in Japanese Patent Publication (KOKOKU) No. 59-5216 may be cited as examples. These particles may be used either singly or in combination of two or more types. The content of such particles in the film is usually not more than 1% by weight, preferably in the range of 0.01 to 1% by weight, more preferably 0.02 to 0.6% by weight. When the particle content is low, the film surface is flattened to induce a tendency to make flaws on the film surface or deteriorate its winding characteristics in the film making process. On the other hand, when the particle content in the film exceeds 1% by weight, the degree of coarsening of the film surface increases excessively to spoil transparency of the film.

The average size of the particles contained in the polyester film needs to fall in the range of 0.2 to 1.5 µm. When the particle size is less than 0.2 µm, the film surface is flattened to cause a deteriorating tendency of the winding characteristics of the film in its production process. When the particle size exceeds 1.5 µm, the particles may present the bright points to obstacle the contaminant inspection of the film when it is used as a release film for a polarizing plate.

It is also essential that the size distribution of the particles used is sharp. More specifically, in the present invention, the particle size distribution factor, which is an index for indicating sharpness of the particle size distribution, needs to fall within the range of 1.0 to 2.0, preferably 1.1 to 1.8. Here, the "particle size distribution factor" is a value given by d25/d75 (d25 and d75 indicate the sizes (µm) of the particles corresponding to 25% and 75%, respectively, of the overall volume of the particles with the cumulative mass of the particles being counted from the greater particle side). When this particle size distribution factor exceeds 2.0, the coarse particles become the bright points to impede contaminant inspection.

In the case of a laminated film formed by laminating the films in two or more layers, it is preferable to contain the particles in the surface layer alone for improving transparency of the film. Here, the "surface layer" means at least one of the front and back side layers, and it is possible to contain the particles in both of the front and back side layers.

In the present invention, the method of containing the particles in the polyester is not specifically defined; it is possible to employ a conventional method. For instance, they may be added at any proper stage in the process for producing the polyester, but preferably the particles are added in the form of a slurry prepared by dispersing the particles in ethylene glycol or the like, at the stage of esterification or at the stage after conclusion of the ester exchange reaction and before start of the polycondensation reaction. There are also available a method in which a slurry of the particles dispersed in ethylene glycol or water is blended with the polyester material by using a vented mixing extruder, and a method in which the dried particles and the polyester material are blended by using a mixing extruder.

The polyester film of the present invention is specified by the fact that the variation of the angle of orientation (as determined by the method described in the Examples) in the film is preferably not more than 3 degrees/500 mm, more preferably not more than 2 degrees/500 mm. When the variation of the angle of orientation is over 3 degrees/500 mm, the transmitted light intensity may vary according to the position of the polarizing plate during its inspection, obstructing stabilized inspection of the polarizing plate.

It is also a feature of the polyester film of the present invention that its refractive index (nβ) in the direction normal to the in-plane direction of the film against the main axis of orientation is preferably not more than 1.6400. When the refractive index exceeds 1.6400, the variation of the angle of orientation of the film tends to enlarge to cause a hindrance to the stabilized inspection of the polarizing plates. This also encourages formation of voids between the particles, and such voids tend to become easily visible bright points in the inspection of the polarizing plates to hinder the inspection.

In the present invention, the amount of oligomer remaining on the film surface after coating of the film with methyl ethyl ketone, its drying and succeeding 180°C, 10-minute heat treatment is not more than 5.0 mg/m², preferably not more than 3.0 mg/m², more preferably not more than 1.0 mg/m². Here, the "amount of oligomer" refers to the amount of cyclic trimer (polyester-derived oligomer) measured by the method described later. If the amount of oligomer precipitated on the film surface exceeds 5.0 mg/m², the bright points formed by oligomer precipitation may be detected as contaminant in the contaminant inspection of the film used as a release film. Such oligomer precipitation is also causative of other problems such as transfer of the oligomer to the adhesive layer or its deposition and accumulation on the carrying rolls which come into contact with the film in the coating step.

Thickness of the layer containing a polyester with a low oligomer content is usually 1 to 15 µm, preferably 2 to 10 µm. When the layer thickness is less than 1 µm, the oligomer from the adjoining layer may be precipitated on the film surface by passing through the layer with a low oligomer content, and the bright points formed by such oligomer may be detected as contaminant, or the oligomer may transfer to the adhesive layer. When the layer thickness is more than 15 µm, the ratio of the polyester with a low oligomer content or the polyester containing the particles increases to elevate the production cost. Increase of the amount of the particle-containing polyester leads to a rise of haze of the produced film, which may pose the problems when the film is used for an optical application.

The polyester film which meets the above-said requirements may be one obtained by a known method such as shown in Japanese Patent Laid-Open (KOKAI) No. 2006-62273.

Thickness of the film of the present invention is not subject to any specific restrictions as far as it is in a range that allows formation of the desired film, but it is usually in the range of 4 to 100 µm, preferably 9 to 50 µm.

In the following, the present invention is described in further detail concerning the film producing method thereof, but the present invention is not limited to the embodiments described below but can be embodied otherwise as well without departing from the scope and spirit of the present invention.

First, a preferred example of the method of producing a polyester used in the present invention is described. In the example shown here, polyethylene terephthalate is used as polyester, but the production conditions differ depending on the polyester used. In the usual way, esterification is carried out with terephthalic acid and ethylene glycol, or dimethyl terephthalate and ethylene glycol are subjected to an ester exchange reaction, and the product is led into a polymerizer where the product is heated at gradually increasing temperatures and under gradually reduced pressure, finally reaching 280°C and a vacuum, to carry out the polymerization reaction to obtain a polyester.

Intrinsic viscosity of the polyester used in the present invention usually falls in the range of 0.40 to 0.90, preferably 0.45 to 0.80, more preferably 0.50 to 0.70. If the intrinsic viscosity is lower than 0.40, the produced film tends to prove unsatisfactory in mechanical strength. If the intrinsic viscosity exceeds 0.90, there may arise the problems such as increased melt viscosity to give an additional load to the extruder and a hike of production cost.

Next, the polyester chips obtained in the manner described above and dried by a conventional method are supplied to a melt extruder and heated to a temperature equal to or higher than the pertinent polymer and melted thereby. Then the molten polymer is extruded from the die onto a rotary cooling drum whereby the extrudate is rapidly cooled to a temperature below glass transition temperature and solidified to obtain a non-oriented sheet of a substantially amorphous state. In this case, in order to improve flatness of the sheet, it is preferable to enhance adhesion between the sheet and the rotary cooling drum. For this purpose, in the present invention, there is preferably employed an electrostatic pinning method or a liquid coating method, or a combination of both methods. In the present invention, the thus obtained sheet is biaxially stretched to make a film. Regarding the stretching conditions, the obtained non-stretched sheet is preferably stretched 2 to 6 times at 70 to 145°C in the machine direction, then further stretched 2 to 6 times at 90 to 160°C in the transverse direction, and the stretched sheet is heat treated at 150 to 240°C for 1 to 600 seconds. Further, the sheet is preferably relaxed 0.1 to 20% in the machine and/or transverse direction at the highest temperature zone of heat treatment and/or the cooling zone at the outlet of heat treatment. It is also possible to perform re-stretching in the machine and transverse directions as required. Still further, the non-stretched sheet may be biaxially stretched simultaneously so that the surface area will be enlarged by 10 to 40 times.

The polyester film of the present invention may be coated by so-called in-line coating in which the film surface is treated in the course of the stretching step, within limits not impairing the effect of the present invention. This can be implemented, for instance, by carrying out a coating treatment with an aqueous solution, an aqueous emulsion, an aqueous slurry or the like for the purpose of improving antistatic properties, slip characteristics, adhesiveness, secondary working characteristics, weather resistance and surface hardness, after completion of the first-stage stretching and before start of the second-stage stretching. Also, various kinds of coating may be performed by off-line coating on the produced film. Such coating can be applied on either one side or both sides of the film. As for the coating composition, both of the aqueous and solvent types can be used for off-line coating, but an aqueous or a water-dispersed type is preferred for in-line coating.

In case where a release layer is provided on the polyester film of the present invention, the material of such a release layer is not specifically defined as far as it has releasability; it is possible to use a type comprising a curable silicone resin as a main constituent or a modified silicone type obtained by, for instance, graft polymerization with an organic resin such as urethane resin, epoxy resin and alkyd resin. Of these materials, the type comprising a curable silicone resin as a main constituent is preferable because of good releasability.

As regards the curable silicone resins, it is possible to use any of the curing reaction types including solvent addition type, solvent condensation type, solvent UV curing type, no-solvent addition type, solventless condensation type, solventless UV curing type, and solventless electron ray curing type.

### EXAMPLES

The present invention is described in further detail below with reference to the embodiments thereof, but the present invention is not limited to these embodiments but can be embodied otherwise as well without departing from the scope of the present invention. In the following descriptions of Examples and Comparative Examples, all "parts" are by weight unless otherwise noted. The methods used for the measurements in the present invention are as explained below.

### (1) Measurement of intrinsic viscosity of polyester:

Precisely weighed 1 g of polyester is added and dissolved in 100 ml of a 50/50 (by weight) mixed solvent of phenol and tetrachloroethane, and its intrinsic viscosity is measured at 30°C.

### (2) Average particle size (d50) and particle size uniformity (d25/d75):

The particle size with a cumulative volume fraction of 50% in the equivalent sphericity distribution determined by using a centrifugal sedimentation type particle size distribution meter (Model SA-CP3 mfd. By Shimadzu Corp.) is here expressed as average particle size d50. The ratio (d25/d75) of the diameter at the point of 25% weight fraction to the diameter at the point of 75% weight fraction, as integrated from the larger particle side, is here expressed as particle size distribution factor.

### (3) Measurement of variation of the angle of orientation in the film:

The film samples are cut out from the polyester film at the positions of every 500 mm along the width of the film from its central and at both ends of the polyester film, and the variation of the angle of orientation at the points of every 500 mm along the width of the film is determined by using an automatic double refractive index meter (KOBRA-21ADH mfd. By Ohji Measuring Instruments Mfd. Co., Ltd.). In the calculation of the variation of the angle of orientation including the positions at both ends of the film, when the space between the samples is less than 500 mm, the variation of the orientation angle at every 500 mm is calculated on a pro-rata basis. Then a 3 m long piece is cut out from the film in its longitudinal direction, and the samples are cut out from the total 7 positions, including both ends, of the piece at every 500 mm along the length thereof from the center position in the widthwise direction, and the angle of orientation of each sample film is measured. There was determined, in this way, the variation of the angle of orientation at every 500 mm in both longitudinal and transverse directions of each sample film, and the greatest value of variation is here expressed as variation of the angle of orientation of the film. In this measurement, it is important to uniformize the reference levels of the angle of orientation in all of the samples. The reference level can be decided arbitorarily.

### (4) Refractive index (nβ) of the film:

From the polyester film, the samples are cut out at the positions of every 500 mm along the width of the film from its central position towards both ends, the samples being also cut out from both ends of the film, and the refractive index of each sample film in the direction normal to the main axis of orientation in the film plane is measured by an Abbe refractometer mfd. By Atago Optical Co., Ltd. The average of the measurements is calculated and expressed as nβ.

### (5) Content of oligomer (cyclic trimer) in polyester:

A prescribed amount of polyester is dissolved in a chloroform/1,1,1,3,3,3-hexafluoro-2-propanol (3/2) mixed solvent, then reprecipitated with chloroform/methanol (2/1) and filtered to remove linear polyethylene terephthalate. Then the solvent in the filtrate is evaporated away by an evaporator, and the resultant precipitate is dissolved in a prescribed amount of DMF. The obtained DMF is supplied to a liquid chromatograph (LC-2010C mfd. By Shimadzu Corp.) to determine the amount of oligomer (cyclic trimer) contained in the polyester. The determined value is divided by the amount of polyester used in the determination, and expressed as the amount of oligomer (cyclic trimer) contained in the polyester. In determining the amount of oligomer (cyclic trimer) by liquid chromatography, it is calculated from the ratio of the peak area of the standard sample to the peak area of the measured sample (absolute calibration method). The standard sample is prepared by weighing the previously collected oligomer (cyclic trimer) and dissolving it in a weighed amount of DMF (dimethylformamide). The liquid chromatograph operating conditions are as shown below.

**Table 1**

| |
|---|
| Mobile phase A: acetonitrile |
| Mobile phase B: 2% acetic acid solution |
| Column: Shim-pack VPODS mfd. By Shimadzu Corp. |
| Column temperature: 40°C |
| Flow rate: 1 ml/min |
| Detecting wavelength: 254 nm |

### (6) Amount of oligomer on film surface after solvent treatment:

Methyl ethyl ketone is applied on the polyester film surface and dried in a 120°C hot air circulating oven under a nitrogen atmosphere for one minute. This film is treated in a 180°C hot air circulating oven under a nitrogen atmosphere for 10 minutes. The polyester film surface after the heat treatment is left in contact with DMF for 3 minutes to dissolve the oligomer precipitated on the film surface. These operations can be accomplished, for instance, by the method described in an article relating to the eluting apparatus used for one-side elution in elution tests, in the self-imposed standards relating to food containers and packages made of synthetic resins such as polyolefin.

Then the obtained DMF, if necessary after having been properly adjusted in concentration by a method such as dilution, is supplied to a liquid chromatograph (Shimadzu LC-7A) to determine the amount of oligomer in DMF. The determined value is divided by the film surface area in contact with DMF and expressed as the amount of oligomer (mg/m²) on the film surface. The amount of oligomer in DMF is determined from the ratio of the peak surface area of the standard sample to the peak surface area of the measuring sample (absolute calibration method).

The standard sample is prepared by precisely weighing the previously separated oligomer (cyclic trimer) and dissolving it in precisely weighed DMF (dimethylformamide). The concentration of the standard sample preferably falls in the range of 0.001 to 0.01 mg/ml. The liquid chromatograph operating conditions are as shown below.

**Table 2**

| |
|---|
| Mobile phase A: acetonitrile |
| Mobile phase B: 2% acetic acid solution |
| Column: MCI GEL ODS 1Hu mfd. By Mitsubishi |
| Chemical Co., Ltd. |
| Column temperature: 40°C |
| Flow rate: 1 ml/l |
| Detecting wavelength: 254 nm |

### (7) Visual inspectability under Cross Nicol arrangement:

One side of a polyester film is coated with a release agent comprising 100 parts of a curable silicone resin (KS-779H produced by Shi-Etsu Chemical Co., Ltd.), 1 part of a curing agent (CAT-PL-8 produced by Shi-Etsu Chemical Co., Ltd.) and 2,200 parts of a MEK/toluene mixed solvent to a coating build-up of 0.1 g/mm² and dried at 170°C for 10 seconds to obtain a release film. This release film is bonded with an adhesive to a polarizing film so that the widthwise direction of the release film will become parallel to the axis of orientation of the polarizing film, thereby making a polarizing plate. On the bonded release film is placed a polarizing plate for inspection so that the axis of orientation will become normal to the widthwise direction of the film, and white light is applied from the polarizing plate side. 10 inspectors were asked to visually observe the polarizing plate for inspection, and their visual inspectability under Cross Nicol arrangement was judged according to the following standards. In making judgment, the A4-sized film samples are made by cutting the polyester film in its widthwise direction from an end thereof, the samples being cut out from the sections corresponding to the positions of 10%, 50% and 90%, respectively, of the film width.

**Table 3**

| <Standard of judgment of visual inspectability under Cross Nicol> | | |
|---|---|---|
| (← Good inspectability) | ⊚>○>Δ>×>×× | (→ Poor inspectability) |

In the above grading, the films with Δ or better marks of rating are supposed to be ones that can be practically used with no problem.

### (6) Contaminant recognizability:

A release agent comprising 100 parts of a curable silicone resin (KS-779H produced by Shi-Etsu Chemical Co., Ltd.), 1 part of a curing agent (CAT-PL-8 produced by Shi-Etsu Chemical Co., Ltd.) and 2,200 parts of a MEK/toluene mixed solvent is coated on one side of a polyester film to a coating build-up of 0.1 g/mm² and dried at 170°C for 10 seconds to obtain a release film. This release film is bonded with a known acrylic adhesive to a polarizing film so that the widthwise direction of the release film will become parallel to the axis of orientation of the polarizing film to make a polarizing plate having a release film. In making the polarizing plate by the above operation, a black metal powder (contaminant) having a particle size of 50 µm or greater is mixed in between the adhesive and the polarizing film to a particle population of 50 pieces/m². On the thus obtained contaminated polarizing plate release film is placed a polarizing plate for inspection so that its axis of orientation will become normal to the widthwise direction of the release film, and white light is applied from the polarizing plate side. 10 inspectors were asked to visually observe the laminate from the polarizing plate side and make evaluation according to the following rating standards on whether the contaminant mixed between the adhesive and the polarizing film could be detected or not. Evaluation was made on the film at its three sections located at the central portion and both ends of the film, and the result of evaluation of the section with the best visual inspectability is here expressed as contaminant recognizability.

**Table 4**

| <Standard of classification of contaminant recognizability> | | |
|---|---|---|
| (← Good contaminant recognizability) | ⊚>○>Δ>× | (→ poor contaminant recognizability) |

The films with ○ or better mark in the above classification are supposed to be ones which can be practically used with no problem.

### Examples 1 to 8, Comparative Examples 1 to 6, and Referential Examples 1 and 2:

### <Preparation of polyester (A0)>

100 parts by weight of dimethyl terephthalate and 60 parts by weight of ethylene glycol, used as the starting materials, were supplied to a reactor by adding magnesium acetate tetrahydrate as a catalyst. With the reaction starting temperature set at 150°C, the reaction temperature was gradually raised while causing evaporation of methanol, the temperature reaching 230°C after 3 hours. The ester exchange reaction was substantially concluded after 4 hours. This reaction mixture, after adding ethyl acid phosphate thereto, was transferred to a polycondenser and subjected to a 4-hour polycondensation reaction by adding 0.04 parts of antimony trioxide. In this operation, the temperature was raised gradually from 230°C till reaching 280°C, while the pressure was reduced gradually from normal pressure till finally reaching 0.3 mmHg. The reaction was stopped at the point corresponding to an intrinsic viscosity of 0.63 due to the change of stirring effort of the reactor after the start of the reaction, and the polymer was discharged out under nitrogen pressure to obtain the chips of a polyester (A0). Intrinsic viscosity of this polyester was 0.63 and its oligomer content was 0.83% by weight.

### <Production of polyester (A1))

The polyester (A0) was preliminarily crystallized at 160°C and then subjected to solid-phase polymerization at 220°C under a nitrogen atmosphere to obtain a polyester (A1) having an intrinsic viscosity of 0.75 and an oligomer content of 0.28% by weight.

### <Production of polyester (B)>

The same procedure as used for the production of the polyesters (A) was conducted except that after the addition of ethyl acid phosphate, an ethylene glycol slurry of the synthetic calcium carbonate particles having an average particle size of 0.8 µm and a particle size distribution factor of 1.6 was added so that the content of the particles would become 1% by weight based on the polyester to obtain a polyester (B). This polyester (B) had an intrinsic viscosity of 0.63 and an oligomer content of 0.82% by weight.

### <Production of polyester (C)>

The same procedure as used for the production of the polyester (B) was conducted except that the synthetic calcium carbonate particles used were those having an average particle size of 0.5 µm and a particle size distribution factor of 1.7, and that their content was 1% by weight based on the polyester to obtain a polyester (C). The obtained polyester (C) had an intrinsic viscosity of 0.63 and an oligomer content of 0.82% by weight.

### <Production of polyester (D)>

The same procedure as used for the production of the polyester (B) was conducted except that the synthetic calcium carbonate particles used were those having an average particle size of 1.4 µm and a particle size distribution factor of 1.9 to obtain a polyester (D). The polyester (D) had an intrinsic viscosity of 0.63 and an oligomer content of 0.82% by weight.

### <Production of polyester (E)>

The same procedure as used for the production of the polyester (B) was conducted except that there were used the silica particles having an average particle size of 2.5 µm and a particle size distribution factor of 1.3, and that their content was 0.6% by weight based on the polyester to obtain a polyester (E). The polyester (E) had an intrinsic viscosity of 0.63 and an oligomer content of 0.82% by weight.

### <Production of polyester (F)>

The same procedure as used for the production of the polyester (B) was conducted except that there were used the natural calcium carbonate particles having an average particle size of 0.8 µm and a particle size distribution factor of 2.5, and that their content was 1% by weight based on the polyester to obtain a polyester (F). The polyester (F) had an intrinsic viscosity of 0.63 and an oligomer content of 0.82% by weight.

### <Production of polyester (G)>

The same procedure as used for the production of the polyester (B) was conducted except that there were used the silica particles having an average particle size of 0.12 µm and a particle size distribution factor of 2.0, and that their content was 0.3% by weight based on the polyester to obtain a polyester (G). The polyester (G) had an intrinsic viscosity of 0.63.

### <Production of film>

The chips of the polyester (A0) or (A1) and the chips of the polyester (B), (C), (D), (E) or (F) were mixed at the ratios shown in Tables 1 and 2 to prepare the material for the layer A, while a material comprising 100% of the chips of the polyester (A0) was used for the layer B. These materials were supplied respectively to two sets of extruder, melted at 290°C and extruded onto a cooling roll set at a surface temperature of 40°C for cooling and solidifying the extrudate with the layer A forming the outermost layers (surface layers) and the layer B forming the intermediate layer by using an electrostatic pinning method to obtain a non-stretched sheet. Then the sheet was stretched in the machine and transverse directions at the rates and temperatures shown in Tables 1 and 2 and heat treated at the temperatures (main crystallization temperatures) also shown in these tables to obtain the polyester films with a width of 3,000 mm. Each of the obtained films had an overall thickness of 40 µm, with the thicknesses of the component layers (A/B/A) being 4 µm/32 µm/4 µm. The film of Comparative Example 5 where the chips of the polyesters (A1) and (G) were used for the film surface layers was extremely flattened in surface configuration and worsened in slip characteristics, and the film after stretching and heat treatment could not be wound up into a roll in the desired way. Also, there were flaws over the whole surface of the film, so that this film was unacceptable as a commercial product.

**Table 5**

| | Example 1 | Example 2 | Example 3 | Example 4⁽¹⁾ |
|---|---|---|---|---|
| Mixing ratio of surface layer materials (wt%) | A0/B (80/20) | A0/C (70/30) | A/D (85/15) | A/B (85/15) |
| Longitudinal stretch ratio (times) | 2.8 | 2.8 | 2.8 | 3.3 |
| Longitudinal stretching temperature (°C) | 90 | 90 | 90 | 90 |
| Transverse stretching ratio (times) | 5.4 | 5.4 | 5.4 | 4.2 |
| Transverse stretching temperature (°C) | 120 | 120 | 120 | 130 |
| Main crystallization temperature (°C) | 200 | 200 | 200 | 200 |
| d50 of added particles (µm) | 0.8 | 0.5 | 1.4 | 0.8 |
| d25/d75 of added particles (µm) | 1.6 | 1.7 | 1.9 | 1.6 |
| nβ | 1.6228 | 1.6245 | 1.6219 | 1.6501 |
| Variation of angle of orientation (degrees/500) | 1.5 | 1.6 | 1.3 | 6.1 |
| Visual inspectability | ⊚ | ⊚ | ⊚ | Δ |
| Contaminant inspectability | ⊚ | ⊚ | ○ | ⊚ |

| | | | | |
|---|---|---|---|---|
| ⁽¹⁾ not part of the invention | | | | |

**Table 6**

| | Comp. Example 1 | Comp. Example 2 | Comp. Example 3 |
|---|---|---|---|
| Mixing ratio of surface layer materials (wt%) | A0/E (80/20) | A0/F (80/20) | AG (40/60) |
| Longitudinal stretch ratio (times) | 2.8 | 2.8 | 2.8 |
| Longitudinal stretching temperature (°C) | 90 | 90 | 90 |
| Transverse stretch ratio (times) | 5.4 | 5.4 | 5.4 |
| Transverse stretching temperature (°C) | 120 | 120 | 120 |
| Main crystallization temperature (°C) | 200 | 200 | 200 |
| d50 of added particles (µm) | 2.5 | 0.8 | 0.12 |
| 25/d75 of added particles (µm) | 1.3 | 2.5 | 2.0 |
| nβ | 1.6245 | 1.6311 | Could not be evaluated. |
| Variation of angle of orientation (degrees/500mm) | 1.4 | 1.6 | |
| Visual inspectability | ⊚ | ⊚ | |
| Contaminant inspectability | × | × | |

**Table 7**

| | Example 5 | Example 6 | Example 7 | Example 8⁽¹⁾ |
|---|---|---|---|---|
| Mixing ratio of surface layer materials (wt%) | Al/B (80/20) | Al/C (70/30) | Al/D (85/15) | Al/B (80/20) |
| Longitudinal stretch ratio (times) | 2.8 | 2.8 | 2.8 | 3.3 |
| Longitudinal stretching temperature (°C) | 90 | 90 | 90 | 90 |
| Transverse stretch ratio (times) | 5.4 | 5.4 | 5.4 | 4.2 |
| Transverse stretching temperature (°C) | 120 | 120 | 120 | 130 |
| Main crystallization temperature (°C) | 200 | 200 | 200 | 220 |
| d50 of added particles (µm) | 0.7 | 0.5 | 1.4 | 0.7 |
| d25/d75 of added particles (µm) | 1.6 | 1.7 | 1.9 | 1.6 |
| nβ | 1.6219 | 1.6245 | 1.6219 | 1.6501 |
| Variation of angle of orientation (degrees/500) | 1.3 | 1.6 | 1.3. | 6.1 |
| Amount of surface oligomer after solvent treatment (mg/m²) | 0.53 | 0.86 | 0.48 | 0.50 |
| Visual inspectability | ⊚ | ⊚ | ⊚ | Δ |
| Contaminant inspectability | ⊚ | ⊚ | ○ | ⊚ |

| | | | | |
|---|---|---|---|---|
| ⁽¹⁾ not part of the invention | | | | |

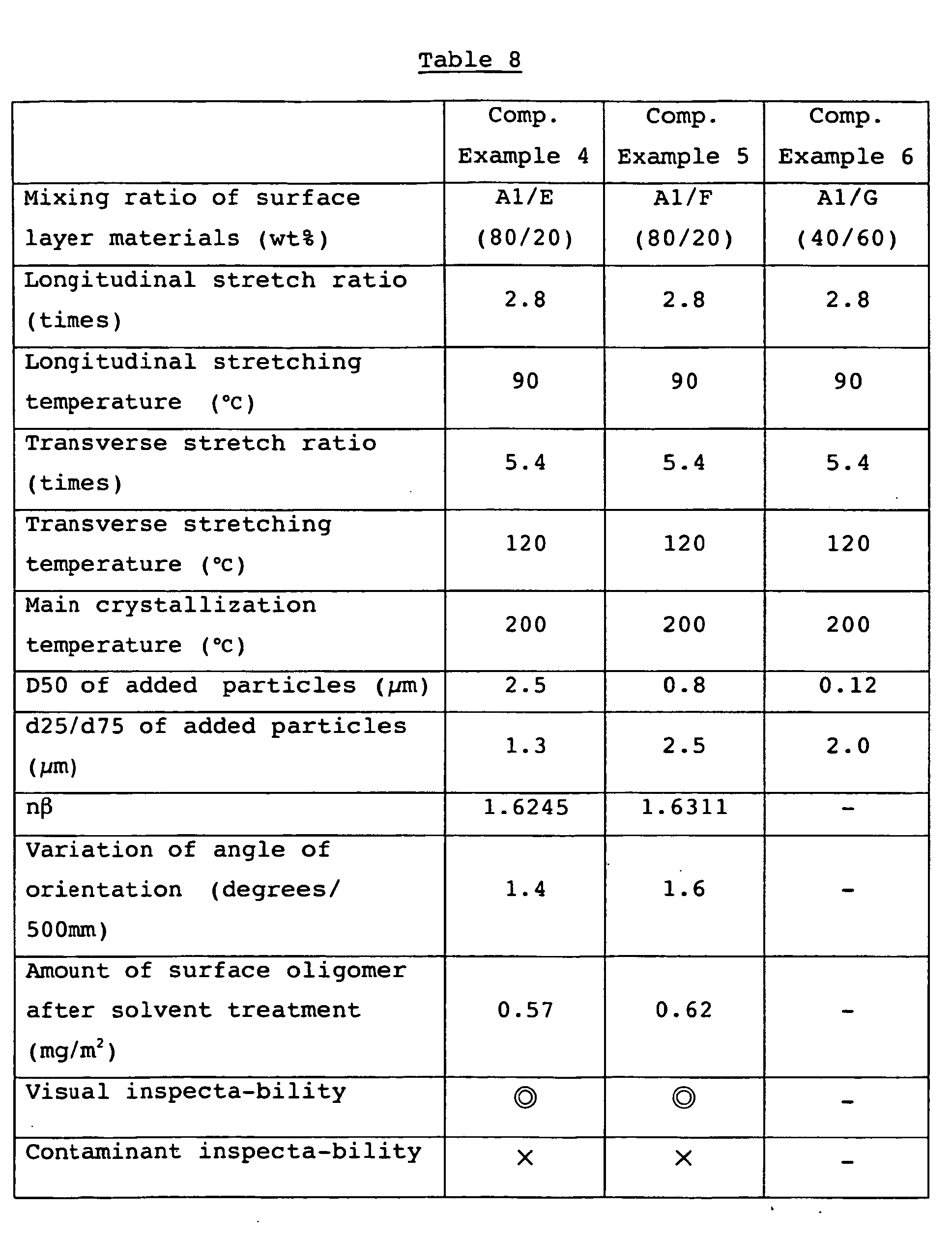

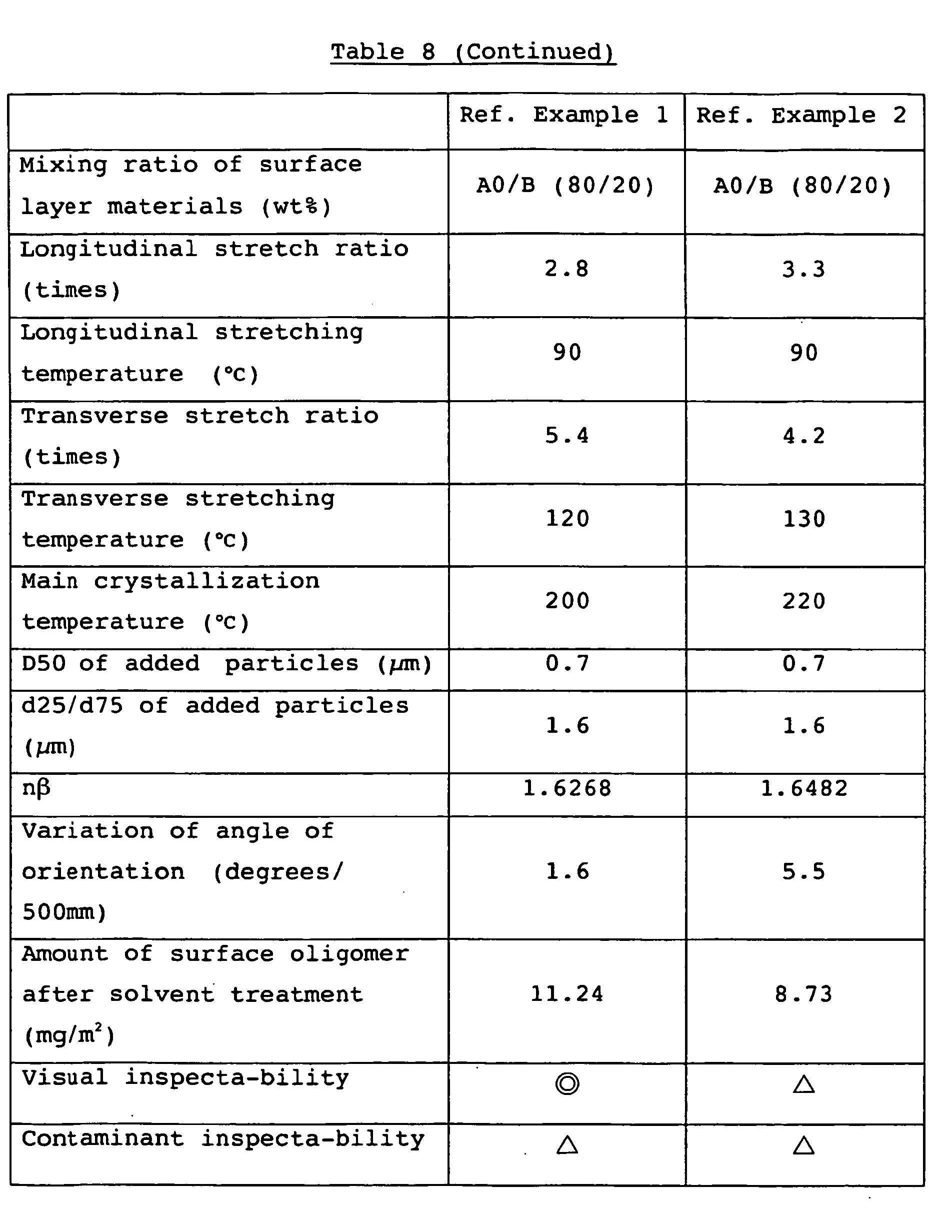

## Claims

1. A polyester film to be used for release films, which contains the particles having an average particle size in the range of 0.2 to 1.5 µm and a particle size distribution factor (d25/d75) in the range of 1.0 to 2.0, and
wherein in the in-plane direction of the film, its refractive index (nβ) in the direction normal to the main axis of orientation is 1.6400 or less.

2. The polyester film according to claim 1, wherein the amount of oligomer on the film surface after having been coated with methyl ethyl ketone, dried and heat treated at 180°C for 10 minutes is 5.0 mg/m² or less.

## Patentansprüche

1. Für Trennfolien zu verwendende Polyesterfolie, welche Teilchen mit einer durchschnittlichen Teilchengröße im Bereich von 0,2 bis 1,5 µm und einem Teilchengrößenverteilungsfaktor (d25/d75) im Bereich von 1,0 bis 2,0 enthält, und wobei in der In-Ebene-Richtung der Folie ihr Brechungsindex (nβ) in der Richtung senkrecht zu der Orientierungs-Hauptachse 1,6400 oder weniger beträgt.

2. Polyesterfolie nach Anspruch 1, wobei die Menge an Oligomer auf der Folienoberfläche, nachdem diese mit Methylethylketon beschichtet, getrocknet und bei 180°C während 10 Minuten wärmebehandelt worden ist, 5,0 mg/m² oder weniger beträgt.

## Revendications

1. Film en polyester, utilisable pour des films détachables, qui contient des particules dont la taille moyenne de particules vaut de 0,2 à 1,5 µm et dont le facteur de distribution des tailles de particules d₂₅/d₇₅ vaut de 1,0 à 2,0, et dont l'indice de réfraction nβ dans la direction normale à l'axe principal d'orientation, dans la direction dans le plan du film, est inférieur ou égal à 1,6400.

2. Film en polyester conforme à la revendication 1, dans lequel la quantité d'oligomères présente à la surface du film, après revêtement avec de la méthyl-éthyl-cétone, séchage et traitement thermique à 180 °C pendant 10 minutes, est inférieure ou égale à 5,0 mg/m².
